# EUROPÄISCHE PATENTSCHRIFT

(11) **EP 3 504 074 B1**
(45) Veröffentlichungstag und Bekanntmachung des Hinweises auf die Patenterteilung: **07.10.2020**
(21) Anmeldenummer: 17751374.4
(22) Anmeldetag: 08.08.2017
(51) Int. Cl.: B60H 1/00

(54) **VERFAHREN ZUM BETRIEB EINER KLIMATISIERUNGSEINRICHTUNG EINES KRAFTFAHRZEUGS**
METHOD FOR CONTROLLING AN HVAC SYSTEM OF A VEHICLE
PROCÉDÉ DE CONTRÔLE D'UN APPAREIL DE CLIMATISATION DE VÉHICULE

(30) Priorität: 24.08.2016 DE 102016215886
(43) Veröffentlichungstag der Anmeldung: 03.07.2019
(73) Patentinhaber: Volkswagen Aktiengesellschaft, 38440 Wolfsburg (DE)
(72) Erfinder: ALBRECHT, Jan-Christoph, 38442 Wolfsburg (DE); WACHSMUTH, Carsten, 38179 Schwülper (DE)
(86) Internationale Anmeldenummer: PCT/EP2017/070071
(87) Internationale Veröffentlichungsnummer: WO 2018/036811

(56) Entgegenhaltungen:
- DE-A1-102008 031 791
- DE-A1-102013 213 587
- DE-A1-102014 002 554
- DE-C1- 19 944 735
- US-A1- 2015 224 848

## Beschreibung

Die Erfindung bezieht sich auf ein Verfahren zum Betrieb einer Klimatisierungseinrichtung eines Kraftfahrzeugs, im Rahmen dessen eine aktuelle Abweichung eines klimatischen Ist-Zustandes in der Fahrgastzelle von einem vorgegebenen klimatischen Soll-Zustand in der Fahrgastzelle ermittelt wird und zur Minderung dieser aktuellen klimatischen Abweichung ein von einem Gebläse erzeugter, klimatisierter Luftstrom in die Fahrgastzelle eingeblasen wird, wobei die Maximaldrehzahl des Gebläses in Abhängigkeit von einem aktuellen Geräuschpegel in der Fahrgastzelle begrenzt wird.

Ein derartiges Verfahren zum Betrieb einer Kraftfahrzeug-Klimatisierungseinrichtung ist bekannt aus der DE 10 2014 002 554 A1.

Moderne Kraftfahrzeug-Klimatisierungseinrichtungen verfügen üblicherweise über eine sogenannte Klimaautomatik, die mittels geeigneter Sensorik den klimatischen Zustand in der Fahrgastzelle des Kraftfahrzeugs ermittelt und mit einem klimatischen Soll-Zustand vergleicht. Der Soll-Zustand wird typischerweise unter Berücksichtigung explizit eingegebener Benutzerwünsche von einer Steuereinheit vorgegeben, die auch vom Benutzer nicht explizit eingegebene Parameter gem. gespeicherten Erfahrungswerten festsetzt. Typischerweise wird vom Benutzer lediglich eine Zieltemperatur eingegeben. Andere Klimaparameter, wie beispielsweise die Luftfeuchte oder Luftgeschwindigkeit wird von der Steuereinheit nach vorgegebenen Algorithmen berechnet.

Häufig steht die mit den Klimatisierungsmaßnahmen verbundene Geräuschentwicklung in einem Zielkonflikt zur schnellen Erreichung eines maximalen Klimakomforts. Die Geräuschentwicklung ist insbesondere durch das Gebläse bedingt, mit welchem der Luftstrom erzeugt wird, der klimatisiert und in die Fahrgastzelle eingeblasen wird. Aus der oben genannten, gattungsbildenden Druckschrift ist es bekannt, mittels Akustik-Sensoren den Geräuschpegel in der Fahrgastzelle zu ermitteln und eine Maximaldrehzahl des Gebläses in Abhängigkeit von dem aktuellen Geräuschpegel in der Fahrgastzelle zu begrenzen. Bei ohnehin hohem Geräuschpegel in der Fahrgastzelle kann ein zusätzlicher, von dem Gebläse erzeugter Geräuschpegel vergleichsweise hoch ausfallen, ohne von den Insassen überhaupt wahrgenommen zu werden. Umgekehrt wird jedoch bei geringem Geräuschpegel in der Fahrgastzelle bereits ein relativ niedriger, zusätzlicher Geräuschpegel durch das Gebläse als störend wahrgenommen. Entsprechend wird bei dem bekannten Verfahren die Maximaldrehzahl des Gebläses, bis zu welcher es im Rahmen der Klimaregelung betrieben werden darf, reduziert. Dies kann jedoch zu einer deutlichen Verzögerung der Angleichung des klimatischen Ist-Zustandes an den klimatischen Soll-Zustand führen. Der resultierende klimatische Diskomfort wird von den Insassen der Fahrgastzelle negativ wahrgenommen.

Aus der DE 10 2008 031 791 A1 ist ein Verfahren zum Betrieb einer Fahrzeug-Klimaanlage bekannt, bei dem der Benutzer über eine Mensch/Maschine-Schnittstelle einen Hinweis erhält, wenn der vorgegebene klimatische Soll-Zustand entweder mit den aktuellen Einstellungen, insbesondere einem ausgeschalteten Kühl-Aggregat, nicht erreichbar ist oder aber mit anderen Einstellungen, insbesondere ebenfalls einem ausgeschalteten Kühl-Aggregat, energieeffizienter zu erreichen ist. Abgesehen davon, dass dieses Verfahren die Geräuschbelastung in der Fahrgastzelle völlig unberücksichtigt lässt, setzt es zwingend den händischen Eingriff des Benutzers in die Klimasteuerung voraus. Dies ist jedoch gerade bei gehobenen Fahrzeugklassen, deren Benutzer eine Vollautomatik erwarten, unerwünscht.

Aus der JP 63-022722 ist eine temperaturabhängige Gestaltung eines Displays der Klimasteuerung in einem Kraftfahrzeug bekannt. Mittels externer Sensoren wird die Außentemperatur erfasst und am Display entsprechend ein Sommer- oder Winterdesgin dargestellt. Hierbei handelt es sich jedoch im Wesentlichen um eine Darstellung ausschließlich informativen Charakters ohne Relevanz für den Klimakomfort.

Es ist die Aufgabe der vorliegenden Erfindung, ein gattungsgemäßes Verfahren derart weiterzubilden, dass der Gesamt-Komfort der Fahrzeugbenutzer verbessert wird.

Diese Aufgabe wird in Verbindung mit den Merkmalen des Oberbegriffs von Anspruch 1 dadurch gelöst, dass bei Passage eines vorgegebenen Diskomfort-Schwellenwertes eine Empfehlung zur entsprechenden Änderung der Gebläsedrehzahl-Begrenzung über eine Mensch/Maschine-Schnittstelle ausgegeben wird.

Bevorzugte Ausführungsformen der Erfindung sind Gegenstand der abhängigen Patentansprüche.

Kern der Erfindung ist zunächst die Bestimmung eines die klimatische Abweichung zwischen Ist- und Soll-Zustand in einfacher Weise repräsentierenden Kennwertes, der hier als Diskomfort-Wert angesprochen wird. Die Berechnung des Diskomfort-Wertes kann im einfachsten Fall einen einzelnen Parameter, beispielsweise eine Temperaturdifferenz zwischen Ist- und Soll-Zustand einbeziehen, in komplexeren Fällen aber auch mehrere Parameter, wie beispielsweise besagte Temperaturdifferenz sowie eine aktuelle Sonneneinstrahlung. Der Fachmann wird verstehen, dass hierfür im Einzelfall geeignete Sensoren vorhanden sein müssen, deren Messergebnisse in eine Steuereinheit zur Berechnung des Diskomfort-Wertes übertragen werden.

Weiter sieht die Erfindung die Vorgabe eines Diskomfort-Schwellenwertes vor, mit welchem der berechnete, aktuelle Diskomfort-Wert, vorzugsweise regelmäßig, verglichen wird. Die Passage des Diskomfort-Schwellenwertes durch den aktuellen, berechneten Diskomfort-Wert bedeutet, dass die Aufrechterhaltung der aktuellen Priorisierung des akustischen oder klimatischen Komforts gegenüber dem klimatischen bzw. akustischen Komfort bei der Abwägung im oben erläuterten Zielkonflikt insgesamt zu Komforteinbußen oberhalb einer kritischen Grenze führt. Das erfindungsgemäße Verfahren "bevormundet" den Benutzer auch in diesem Fall nicht; es unterrichtet den Benutzer jedoch von der ungünstigen Konstellation in Form einer Empfehlung, zumindest temporär die Priorisierung des akustischen Komforts zugunsten einer Priorisierung des klimatischen Komforts bzw. umgekehrt aufzugeben. Das kann insbesondere derart erfolgen, dass bei Unterschreitung des Diskomfort-Schwellenwertes eine Empfehlung zur Absenkung der Gebläsedrehzahl-Begrenzung ausgegeben wird. Dies wird der in Praxis häufigste Fall sein, nämlich dass der klimatische Ist-Komfortzustand insbesondere zu Fahrtbeginn besonders weit vom Soll-Komfortzustand abweicht und eine schnelle Klimatisierung unter temporärer Inkaufnahme akustischen Diskomforts erfolgen soll. Bei Annäherung an den Soll-Komfortzustand wird der Diskomfort-Schwellenwert dann "von oben" passiert, was mit einer erfindungsgemäßen Empfehlung zur Absenkung der Gebläsedrehzahl-Begrenzung einhergeht. Von der Erfindung mit umfasst ist jedoch auch der umgekehrte Fall, dass bei Überschreitung des Diskomfort-Schwellenwertes eine Empfehlung zur Anhebung der Gebläsedrehzahl-Begrenzung ausgegeben wird. Wie der Benutzer auf eine derartige Empfehlung reagiert, bleibt ihm überlassen. Hinsichtlich der möglichen Reaktionen des Verfahrens auf die Reaktion des Benutzers sind verschiedene Varianten denkbar, die Gegenstand von nachfolgend ausführlicher diskutierten, bevorzugten Ausführungsformen sind.

Der Erfindung liegt die Erkenntnis zugrunde, dass der Benutzer im Normalfall zwar die Geräuschoptimierung der Klimaautomatik genießt, dass jedoch eine übermäßige Klimakomforteinbuße in Einzelfällen zu einer Unzufriedenheit des Benutzers mit dem System insgesamt führen kann. Andererseits haben die Erfinder erkannt, dass der Benutzer in der Regel weder willens noch in der Lage ist, sich in die komplexe Steuerung der Klimaautomatik einzuarbeiten, regelungstechnische Sonderfälle als solche zu erkennen und eigeninitiativ manuell gegensteuernd einzugreifen. Die Erfinder haben daraus die Idee abgeleitet, den Benutzer vom Vorliegen eines regelungstechnischen Sonderfalls zu informieren, ihm zugleich eine von der Mehrzahl der Benutzer als angenehm empfundene Vorgehensweise vorzuschlagen, ihm aber letztendlich die Entscheidung über die Priorisierung von Geräuschvs. Klimakomfort selbst zu überlassen.

Der Fachmann wird erkennen, dass zur Vereinfachung der obigen Beschreibung davon ausgegangen wurde, dass der Diskomfort-Wert umso größer ist, je größer die Abweichung des klimatischen Ist-Zustandes vom vorgegebenen klimatischen Soll-Zustand ist. Entsprechend ist oben vom "Überschreiten" bzw. "Unterschreiten" des Diskomfort-Schwellenwertes die Rede. Im Kontext der Patentansprüche ist dieser Begriff jedoch weit zu verstehen und abhängig von der konkreten Definition des Diskomfort-Wertes. Ein "Überschreiten" des Diskomfort-Schwellenwertes ist in diesem Sinne dahingegen auszulegen, dass der Schwellenwert von einer geringeren klimatischen Abweichung in Richtung auf eine größere klimatische Abweichung hin passiert wird. Ein "Unterschreiten" des Diskomfort-Schwellenwertes ist in diesem Sinne dahingegen auszulegen, dass der Schwellenwert von einer größeren klimatischen Abweichung in Richtung auf eine geringere klimatische Abweichung hin passiert wird.

Der Fachmann wird ebenso verstehen, dass der Begriff der Anhebung der Gebläsedrehzahl-Begrenzung nicht nur auf eine begrenzte Anhebung der zulässigen Maximaldrehzahl des Gebläses hinweist, sondern auch die vollständige Aufhebung der Gebläsedrehzahl-Begrenzung umfasst.

Bei differenzierteren Ausführungsformen der Erfindung ist vorgesehen, dass eine Mehrzahl von Diskomfort-Schwellenwerten vorgegeben werden, deren Passage jeweils zur Empfehlung eines anderen Änderungsgrades der Gebläsedrehzahl-Begrenzung führt. So kann beispielsweise eine Überschreitung eines ersten, niedrigeren Diskomfort-Schwellenwertes zu der Empfehlung führen, die Gebläsedrehzahl-Begrenzung moderat anzuheben, wohingegen die Überschreitung eines zweiten, höheren Diskomfort-Schwellenwertes zu der Empfehlung führen kann, die Gebläsedrehzahl-Begrenzung stärker anzuheben oder gar vollkommen aufzuheben. Ebenso kann beispielsweise eine Unterschreitung eines ersten, höheren Diskomfort-Schwellenwertes zu der Empfehlung führen, die Gebläsedrehzahl-Begrenzung moderat abzusenken, wohingegen die Unterschreitung eines zweiten, niedrigeren Diskomfort-Schwellenwertes zu der Empfehlung führen kann, die Gebläsedrehzahl-Begrenzung stärker abzusenken. Die konkrete Wahl der Anzahl von Diskomfort-Schwellenwerten wird stark von den baulichen Einzelheiten des Kraftfahrzeugs und den Erwartungen der Kunden-Zielgruppe abhängen.

Wie erwähnt, kann verfahrensseitig auf unterschiedliche Weise mit den Reaktionen des Benutzers auf die erfindungsgemäße Empfehlung umgegangen werden. Bei einer ersten Ausführungsform der Erfindung ist vorgesehen, dass die Gebläsedrehzahl-Begrenzung in der empfohlenen Weise verändert wird, wenn nicht von einem Benutzer innerhalb einer vorgegebenen Antwortzeit über die Mensch/Maschine-Schnittstelle eine abweichende Anweisung eingegeben wird. Bei dieser Variante wird dem Aspekt des maximalen Bedienungskomforts besonderer Vorrang eingeräumt. Allerdings könnten sich einige Benutzergruppen hiervon bevormundet oder bedrängt fühlen.

Bei einer alternativen Ausführungsform ist daher vorgesehen, dass die Gebläsedrehzahl-Begrenzung in der empfohlenen Weise verändert wird, wenn von einem Benutzer über die Mensch/Maschine-Schnittstelle eine Bestätigung der Empfehlung eingegeben wird. Bei dieser Variante bleibt es also entgegen der erfindungsgemäßen Empfehlung auch bei Passage des Diskomfort-Schwellenwertes bei der aktuellen Priorisierung, sofern nicht eine ausdrückliche Anweisung des Benutzers erfolgt, die Gebläsedrehzahl-Begrenzung empfehlungsgemäß zu verändern. Dabei ist es durchaus möglich, für die Bestätigung nur eine begrenzte Antwortzeit zur Verfügung zu stellen, um dem Benutzer nicht durch eine andauernde Beibehaltung der Empfehlung ein Gefühl der Bedrängung zu vermitteln.

Da die benutzerseitige Vorliebe für die eine oder andere der vorgenannten Varianten individuell sehr unterschiedlich sein kann, ist bevorzugt vorgesehen, dass der Benutzer im Rahmen einer Systemkonfiguration die Möglichkeit hat, das erfindungsgemäße Verfahren im Rahmen der ersten oder der zweiten Variante zu konfigurieren.

Im Kontext der obigen Beschreibung wurde stets allgemein von einer Mensch/Maschine-Schnittstelle gesprochen, über welche die Empfehlung an den Benutzer ausgegeben wird bzw. über welche der Benutzer eine Anweisung oder Bestätigung eingeben kann. Die konkrete Ausgestaltung dieser Mensch/Maschine-Schnittstelle kann sehr unterschiedlich ausfallen. Bei einer ersten Ausführungsform ist vorgesehen, dass die Mensch/Maschine-Schnittstelle einen Bildschirm umfasst, auf dem die Empfehlung optisch ausgegeben wird. Dies kann beispielsweise als Text und/oder in Form eines angezeigten Icons erfolgen. Besonders bevorzugt ist ein solcher Bildschirm als Touch-Screen ausgebildet und die Benutzereingabe wird bevorzugt als Touch-Ereignis angefordert, beispielsweise durch Fingerdruck oder Fingerannäherung auf das vorerwähnte Icon.

Des Weiteren ist es möglich die Benutzereingabe anhand einer Geste des Benutzers zu erfassen, so dass eine Eingabe berührungslos erfolgen kann.

Ebenso kann vorgesehen sein, dass die Mensch/Maschine-Schnittstelle mechanische Betätigungselemente, wie beispielsweise Knöpfe, Drehräder, Trackballs, Joysticks, etc. umfasst und die Benutzereingabe als mechanisches Betätigungsereignis angefordert wird.

Denkbar ist auch, dass die Mensch/Maschine-Schnittstelle eine Sprachausgabeeinheit umfasst und die Empfehlung als Sprachausgabe ausgegeben wird. Analog dazu kann auch vorgesehen sein, dass die Mensch/Maschine-Schnittstelle eine Spracheingabeeinheit umfasst und die Benutzereingabe als Spracheingabe-Ereignis angefordert wird.

Der Fachmann wird verstehen, dass die oben genannten sowie weitere Ein- und Ausgabeeinrichtungen jeweils einzeln oder in Kombination mit einer oder mehrerer der anderen Varianten einsetzbar sind.

Weitere Merkmale und Vorteile der Erfindung ergeben sich aus der nachfolgenden, speziellen Beschreibung und den Zeichnungen.

Es zeigen:
- Figur 1: eine schematische Darstellung des erfindungsgemäßen Verfahrens,
- Figur 2: eine beispielhafte Darstellung eines im Rahmen einer ersten Ausführungsform des erfindungsgemäßen Verfahrens angesteuerten Bildschirms,
- Figur 3: eine beispielhafte Darstellung eines im Rahmen einer zweiten Ausführungsform des erfindungsgemäßen Verfahrens angesteuerten Bildschirms und
- Figur 4: eine beispielhafte Darstellung eines im Rahmen einer dritten Ausführungsform des erfindungsgemäßen Verfahrens angesteuerten Bildschirms.

Gleiche Bezugszeichen in den Figuren deuten auf gleiche oder analoge Elemente hin.

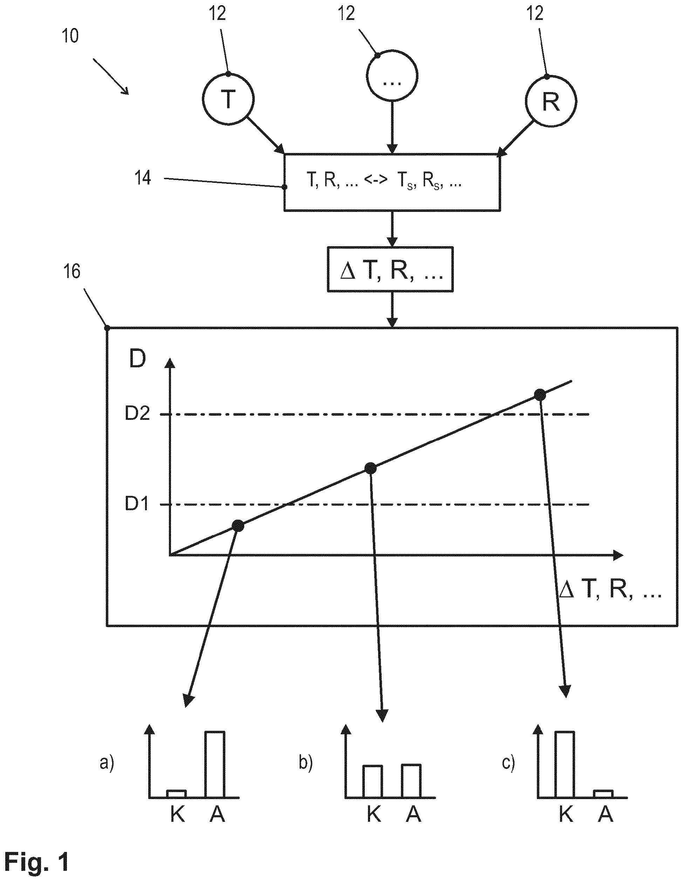

Figur 1 zeigt in stark schematisierter Darstellung den Ablauf eines erfindungsgemäßen Verfahrens 10.

Sensoren 12 erfassen unterschiedliche klimarelevante Parameter, die zur Bestimmung eines klimatischen Ist-Zustandes in der Fahrgastzelle eines Kraftfahrzeugs erforderlich sind. Rein beispielhaft sind hier ein Temperatursensor T und ein Sensor zur Erfassung der aktuellen Sonneneinstrahlung R dargestellt. Ein weiterer mit "..." markierter Sensor 12 steht stellvertretend für beliebige weitere klimarelevante Parameter, die je nach Erfordernissen des Einzelfalls in die Berechnung des klimatischen Ist-Zustandes einbezogen werden können.

In einer Vergleichseinheit, die soft- und/oder hardwaremäßig ausgebildet sein kann, erfolgt ein Vergleich des sich aus den gemessenen Parametern T, R, ... ergebenden klimatischen Ist-Zustandes mit einem vorgegebenen klimatischen Soll-Zustand, der hier als "T_{S}, R_{S}, ..." dargestellt ist, obgleich der Fachmann erkennt, dass die Definition des klimatischen Soll-Zustandes nicht auf denselben Parametern beruhen muss, wie die Definition des klimatischen Ist-Zustandes.

Ausgabeseitig liefert die Vergleichseinheit 14 die Abweichung ΔT, R, ... des klimatischen Istvom klimatischen Soll-Zustand. Diese Abweichung wird in die Diskomfort-Berechnungseinheit 16 eingegeben, die soft- oder hardwaremäßig realisiert sein kann. Diese liefert einen Diskomfort-Wert D, der repräsentativ für die zuvor ermittelte klimatische Abweichung ist, wobei die in Figur 1 zu rein illustrativen Zwecken dargestellte lineare Abhängigkeit in der Praxis typischerweise deutlich komplexer ausfällt.

In der Diskomfort-Berechnungseinheit sind bei der dargestellten Ausführungsform zwei Diskomfort-Schwellenwerte D1, D2 hinterlegt, mit denen der berechnete, aktuelle Diskomfort-Wert D verglichen wird. Je nach dem Ergebnis dieses Vergleichs erfolgt eine Empfehlung an den Fahrzeugbenutzer in Bezug auf die Beibehaltung oder Beendigung der Priorisierung des akustischen Komforts vor dem klimatischen Komfort bei den Vorgaben zur automatisierten Klimasteuerung. Die unterschiedlichen Empfehlungsvarianten sind in Figur 1 durch die drei Pfeile, jeweils ausgehend von unterschiedlichen Komfort-Werten D dargestellt. Ganz links in Figur 1 wird als Fall (a) bei niedrigem Diskomfort-Wert D unter einem ersten Diskomfort-Schwellenwert D1 eine Empfehlung zur Beibehaltung der deutlichen Priorisierung des akustischen Komforts (A) gegenüber dem klimatischen Komfort (K) generiert. In dem in Figur 1 mittleren Fall (b) eines mäßigen Diskomfort-Wertes D zwischen den Diskomfort-Schwellenwerten D1 und D2 erfolgt eine Empfehlung zugunsten einer graduellen Abschwächung der Priorisierung des akustischen Komforts A im Vergleich zum klimatischen Komfort K. In dem in Figur 1 ganz rechten Fall (c) eines hohen Diskomfort-Wertes D oberhalb des Diskomfort-Schwellenwertes D2 erfolgt eine Empfehlung für eine klare Priorisierung des klimatischen Komforts K im Vergleich zum akustischen Komfort A. Gerätetechnisch bedeutet ein Wechsel der Priorisierung eine Anhebung der maximalen Drehzahl des Gebläses, d.h. einer Änderung der Gebläsedrehzahl-Begrenzung.

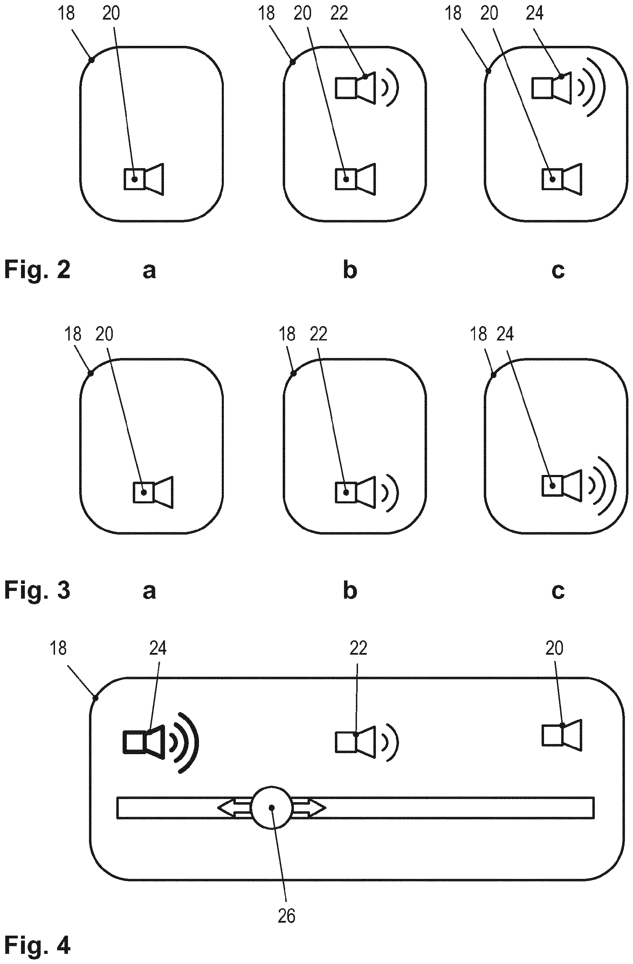

Die Figuren 2-4 zeigen Beispiele, wie die vorgenannte Empfehlung dem Benutzer mittels einer als Touch-Screen 18 ausgebildeten Mensch/Maschine-Schnittstelle kommuniziert werden kann. Figur 2a zeigt die Darstellung bei der Empfehlung (a) von Figur 1 zum Betrieb der Klimatisierungseinrichtung im geräuschoptimierten Modus. Da dieser allerdings ohnehin als Normal-Modus angenommen wird, entspricht die vorgenommene "Empfehlung", symbolisiert durch das "leise"-Icon 20, im Wesentlichen einer schlichten Information des Benutzers über den aktuellen Betriebszustand.

Figur 2b entspricht der Empfehlung (b) von Figur 1, mit der der Benutzer einerseits über den aktuellen, geräuschoptimierten Betriebszustand ("leise"-Icon 20) informiert wird und ihm der Wechsel in einen mäßig geräuschintensiven, aber klimatisch vorteilhaften Betriebsmodus ("mittel"-Icon 22) empfohlen wird. Denkbar sind die Verfahrensvarianten, bei denen der Benutzer entweder zur Erreichung des Moduswechsels die Empfehlung durch Druck auf das "mittel"-Icon 22 bestätigen muss oder bei dem der Wechsel selbständig erfolgt, sofern der Benutzer nicht innerhalb einer vorgegebenen Antwortzeit durch Druck auf das "leise"-Icon 20 auf der Beibehaltung des geräuschoptimierten Modus besteht.

Analoges gilt für den Fall von Figur 2c, der die Darstellung der Empfehlung (c) von Figur 1 wiedergibt und hierfür das "laut"-Icon 24 vorsieht.

Figur 3 zeigt in analoger Anordnung wie Figur 2 eine vereinfachte Darstellungsform der erfindungsgemäßen Empfehlungen. Hier erscheint das Lautsprecher-Icon 20, 22, 24 des jeweils empfohlenen Betriebsmodus, welches der Benutzer zur tatsächlichen Durchführung des Moduswechsel zu bestätigen hat, insbesondere durch Druck auf das jeweils dargestellte Icon.

Figur 4 schließlich zeigt einen komplexen Touch-Screen 18, bei dem der Benutzer den Betriebsmodus durch Verschieben eines Sliders 26 frei wählen kann, wobei jedoch der jeweils empfohlenen Betriebszustand, beispielsweise durch Highlighting, hervorgehoben werden kann. Bei dem in Figur 4 dargestellten Fall ist dies der besonders geräuschintensive, rein klimaoptimierte Modus ("laut"-Icon 24). Die Verschiebung des Sliders 26 kann als weitere Möglichkeit auch durch eine Geste mit einem oder mehreren Fingern oder einer Hand eines Benutzers initiiert werden, sofern eine entsprechende Erfassungseinheit auf kapazitiver Basis oder eine Kamera im entsprechenden Bereich vorgesehen ist.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Beschreibung ein breites Spektrum an Variationsmöglichkeiten an die Hand gegeben. Insbesondere wird er leicht Varianten zur umgekehrten Passage des bzw. der Diskomfort-Schwellenwerte ableiten können.

### Bezugszeichenliste

- 10: Verfahrensschema
- 12: Sensor
- 14: Vergleichseinheit
- 16: Diskomfort-Berechnungseinheit
- 18: Touch-Screen
- 20: Icon
- 22: Icon
- 24: Icon
- 26: Slider

## Patentansprüche

1. Verfahren zum Betrieb einer Klimatisierungseinrichtung eines Kraftfahrzeugs, im Rahmen dessen eine aktuelle Abweichung eines klimatischen Ist-Zustandes in der Fahrgastzelle von einem vorgegebenen klimatischen Soll-Zustand in der Fahrgastzelle ermittelt wird und zur Minderung dieser aktuellen klimatischen Abweichung ein von einem Gebläse erzeugter, klimatisierter Luftstrom in die Fahrgastzelle eingeblasen wird, wobei die Maximaldrehzahl des Gebläses in Abhängigkeit von einem aktuellen Geräuschpegel in der Fahrgastzelle begrenzt wird,
wobei ein die aktuelle klimatische Abweichung repräsentierender Diskomfort-Wert (D) bestimmt wird und, **dadurch gekennzeichnet,**
**dass** bei Passage eines vorgegebenen Diskomfort-Schwellenwertes (D1, D2) eine Empfehlung zur entsprechenden Änderung der Gebläsedrehzahl-Begrenzung über eine Mensch/Maschine-Schnittstelle (18) ausgegeben wird.

2. Verfahren nach Anspruch 1,
**dadurch gekennzeichnet,**
**dass** bei Unterschreitung des Diskomfort-Schwellenwertes (D1, D2) eine Empfehlung zur Absenkung der Gebläsedrehzahl-Begrenzung ausgegeben wird.

3. Verfahren nach einem der vorangehenden Ansprüche,
**dadurch gekennzeichnet,**
**dass** bei Überschreitung des Diskomfort-Schwellenwertes (D1, D2) eine Empfehlung zur Anhebung der Gebläsedrehzahl-Begrenzung ausgegeben wird.

4. Verfahren nach einem der vorangehenden Ansprüche,
**dadurch gekennzeichnet,**
**dass** eine Mehrzahl von Diskomfort-Schwellenwerten (D1, D2) vorgegeben werden, deren Passage jeweils zur Empfehlung eines anderen Änderungsgrades der Gebläsedrehzahl-Begrenzung führt.

5. Verfahren nach einem der vorangehenden Ansprüche,
**dadurch gekennzeichnet,**
**dass** die Gebläsedrehzahl-Begrenzung in der empfohlenen Weise verändert wird, wenn nicht von einem Benutzer innerhalb einer vorgegebenen Antwortzeit über die Mensch/Maschine-Schnittstelle (18) eine abweichende Anweisung eingegeben wird.

6. Verfahren nach einem der Ansprüche 1 bis 4,
**dadurch gekennzeichnet,**
**dass** die Gebläsedrehzahl-Begrenzung in der empfohlenen Weise verändert wird, wenn von einem Benutzer über die Mensch/Maschine-Schnittstelle (18) eine Bestätigung der Empfehlung eingegeben wird.

7. Verfahren nach Anspruch 6,
**dadurch gekennzeichnet,**
**dass** die dem Benutzer zur Bestätigung der Empfehlung über die Mensch/Maschine-Schnittstelle (18) nur eine vorgegebene Antwortzeit zur Verfügung gestellt wird.

8. Verfahren nach einem der vorangehenden Ansprüche,
**dadurch gekennzeichnet,**
**dass** die Mensch/Maschine-Schnittstelle einen Bildschirm (18) umfasst, auf dem die Empfehlung optisch ausgegeben wird.

9. Verfahren nach Anspruch 8,
**dadurch gekennzeichnet,**
**dass** der Bildschirm als Touch-Screen (18) ausgebildet ist und Benutzereingaben als Touch-Ereignis angefordert werden.

10. Verfahren nach einem der vorangehenden Ansprüche,
**dadurch gekennzeichnet,**
**dass** die Mensch/Maschine-Schnittstelle eine Sprachausgabeeinheit umfasst, wobei die Empfehlung als Sprachausgabe ausgegeben wird
und/oder dass die Mensch/Maschine-Schnittstelle eine Spracheingabeeinheit umfasst, wobei Benutzereingaben als Spracheingabe-Ereignis angefordert werden.

## Claims

1. Method for the operation of an air-conditioning device of a motor vehicle, in the context of which a current deviation of an actual state of the climate in the passenger compartment from a specified target state of the climate in the passenger compartment is determined, and in order to reduce this current climatic deviation, a conditioned air flow generated by a fan is blown into the passenger compartment, the maximum speed of the fan being limited depending on a current sound level in the passenger compartment, a discomfort value (D) representing the current climatic deviation being determined, and **characterized in that** a recommendation for the corresponding change of the fan speed limit is output via a human/machine interface (18) when a specified discomfort threshold value (D1, D2) is passed.

2. Method according to Claim 1,
**characterized in that**
a recommendation for lowering the fan speed limit is output when the discomfort threshold value (D1, D2) is undershot.

3. Method according to any one of the preceding claims,
**characterized in that**
a recommendation for raising the fan speed limit is output when the discomfort threshold value (D1, D2) is exceeded.

4. Method according to any one of the preceding claims,
**characterized in that**
a plurality of discomfort threshold values (D1, D2) is specified which, when passed, respectively lead to the recommendation of a different degree of change in the fan speed limit.

5. Method according to any one of the preceding claims,
**characterized in that**
the fan speed limit is changed in the recommended manner if a deviating instruction is not input by a user via the human/machine interface (18) within a specified response time.

6. Method according to any one of Claims 1 to 4,
**characterized in that**
the fan speed limit is changed in the recommended manner if a confirmation of the recommendation is input by a user via the human/machine interface (18).

7. Method according to Claim 6,
**characterized in that**
the user is provided with only a specified response time for confirming the recommendation via the human/machine interface (18).

8. Method according to any one of the preceding claims,
**characterized in that**
the human/machine interface comprises a screen (18) on which the recommendation is visually output.

9. Method according to Claim 8,
**characterized in that**
the screen is designed as a touch screen (18) and user inputs are requested as touch event.

10. Method according to any one of the preceding claims,
**characterized in that**
the human/machine interface comprises a voice output unit, the recommendation being output as voice output,
and/or the human/machine interface comprises a voice input unit, user inputs being requested as voice input event.

## Revendications

1. Procédé de contrôle d'un appareil de climatisation d'un véhicule, dans le cadre duquel un écart actuel est déterminé entre un état climatique réel dans l'habitacle et un état climatique de consigne prédéfini dans l'habitacle et, pour la réduction dudit écart climatique actuel, un flux d'air climatisé généré par un ventilateur est soufflé dans l'habitacle, la vitesse de rotation maximale du ventilateur étant limitée en fonction d'un niveau de bruit actuel dans l'habitacle, une valeur d'inconfort (D) représentant l'écart climatique actuel étant déterminée et **caractérisé en ce que,** lors du passage d'une valeur seuil d'inconfort (D1, D2) prédéfinie, une recommandation de modification correspondante de la limitation de la vitesse de rotation du ventilateur est émise par une interface homme-machine (18).

2. Procédé selon la revendication 1,
**caractérisé en ce**
**que**, lors d'une descente en dessous de la valeur seuil d'inconfort (D1, D2), une recommandation de réduction de la limitation de la vitesse de rotation du ventilateur est émise.

3. Procédé selon l'une quelconque des revendications précédentes,
**caractérisé en ce**
**que,** lors du dépassement de la valeur seuil d'inconfort (D1, D2), une recommandation d'augmentation de la limitation de la vitesse de rotation du ventilateur est émise.

4. Procédé selon l'une quelconque des revendications précédentes,
**caractérisé en ce**
**qu**'une pluralité de valeurs seuils d'inconfort (D1, D2) est prédéfinie, dont le passage entraîne respectivement une recommandation d'un autre degré de modification de la limitation de la vitesse de rotation du ventilateur.

5. Procédé selon l'une quelconque des revendications précédentes,
**caractérisé en ce**
**que** la limitation de la vitesse de rotation du ventilateur est modifiée de la manière recommandée, si une instruction différente n'est pas saisie par un utilisateur dans un temps de réponse prédéfini sur l'interface homme-machine (18).

6. Procédé selon l'une quelconque des revendications 1 à 4,
**caractérisé en ce**
**que** la limitation de la vitesse de rotation du ventilateur est modifiée de la manière recommandée, si une confirmation de la recommandation est saisie par un utilisateur sur l'interface homme-machine (18).

7. Procédé selon la revendication 6,
**caractérisé en ce**
**que** seul un temps de réponse prédéfini est mis à la disposition de l'utilisateur pour la confirmation de la recommandation à travers l'interface homme-machine (18).

8. Procédé selon l'une quelconque des revendications précédentes,
**caractérisé en ce**
**que** l'interface homme-machine comprend un écran (18), sur lequel la recommandation est émise optiquement.

9. Procédé selon la revendication 8,
**caractérisé en ce**
**que** l'écran est formé comme un écran tactile (18) et que des entrées utilisateur sont demandées sous la forme d'un événement tactile.

10. Procédé selon l'une quelconque des revendications précédentes,
**caractérisé en ce**
**que** l'interface homme-machine comprend une unité de sortie vocale, la recommandation étant émise sous la forme de sortie vocale
et/ou **que** l'interface homme-machine comprend une unité d'entrée vocale, les entrées utilisateur étant demandées sous la forme d'un événement d'entrée vocale.
